Europäisches Patentamt

European Patent Office

Office européen des brevets

(11) Publication number: **0 178 128**
**B1**

# EUROPEAN PATENT SPECIFICATION

(45) Date of publication of patent specification: **24.05.89**

(51) Int. Cl.⁴: **B 62 D 3/12,** B 62 D 5/22

(21) Application number: **85307076.1**

(22) Date of filing: **03.10.85**

(54) Rack and pinion steering mechanism for a motor vehicle.

(30) Priority: **10.10.84 GB 8425632**

(43) Date of publication of application:
**16.04.86 Bulletin 86/16**

(45) Publication of the grant of the patent:
**24.05.89 Bulletin 89/21**

(84) Designated Contracting States:
**DE FR GB SE**

(56) References cited:
**EP-A-0 180 017**
**DE-B-2 249 653**
**GB-A- 735 641**
**GB-A-1 241 428**

(73) Proprietor: **ADWEST ENGINEERING LIMITED**
**The Aerodrome Woodley**
**Reading RG5 4SN Berkshire (GB)**

(72) Inventor: **Millard, Barry John**
**327 Wokingham Road**
**Reading Berkshire (GB)**

(74) Representative: **Sheader, Brian N. et al**
**ERIC POTTER & CLARKSON 27 South Street**
**Reading Berkshire, RG1 4QU (GB)**

## Description

This invention relates to a rack and pinion steering mechanism for a motor vehicle.

A rack and pinion steering mechanism may have a pinion with helically cut teeth, and the rack must be accurately machined to a suitable profile to mesh with the pinion. The mechanism may include elements intended to accommodate the greater wear that normally takes place in service over the central part of the rack, corresponding to the straight-ahead steering alignment of the motor vehicle.

Because it is impossible to machine the components, such as housings, pinion and rack bar, to perfect ideal sizes, means of adjusting the mesh between the pinion and rack is essential in all rack and pinion steering mechanisms.

It has been proposed in GB-A- 1 241 428 to connect the two opposite ends of the steering mechanism by carrier bars, the rack being pivotally mounted at one end only between the carrier bars whereby it can be urged into engagement with the pinion. This arrangement helps to achieve correct mesh between the rack and pinion. However, it would be desirable to provide a rack and pinion steering mechanism that enables correct meshing engagement between the teeth of the rack and pinion whilst at the same time avoiding the use of carrier bars and a pivotal connection of the rack whereby to provide a construction that is simpler and lighter and more economical to manufacture.

According to the present invention a rack and pinion steering mechanism for a motor vehicle comprises a housing, a rack member having a toothed rack portion formed thereon and mounted for longitudinal movement in said housing, and a pinion rotatably mounted in said housing in meshing engagement with the toothed rack portion and adapted for connection to the steering control of a motor vehicle for rotation thereby, wherein the rack member is inherently radially flexible, means is provided to restrain the opposite ends of the rack member against radial movement relative to the housing, and means is provided for resiliently flexing the rack member between the said opposite ends thereof towards the pinion to engage the rack portion of the rack member with the pinion to maintain correct meshing of the teeth of the rack portion with the pinion.

By virtue of the invention, the rack member is always urged towards the pinion. As wear occurs on the rack and on the pinion, the rack member can flex sufficiently to maintain proper engagement between the pinion and the rack. A normally straight rack member may suitably be flexed by up to about 0.25mm towards the pinion, which is normally sufficient to take up all manufacturing tolerance. Wear is generally greatest at the centre, corresponding to the straight-ahead steering position, and in the case of a rack member anchored at both ends with respect to radial movement relative to the housing, the rack can adopt an arcuate form which effectively gives the greatest compensation for wear at the centre of the rack.

The means resiliently flexing the rack member may be located within the housing acting against the rear of the rack member opposite the pinion.

The steering mechanism may be associated with double-acting piston-and-cylinder means to provide power assistance. Fluid under pressure may be directed from a source thereof to one side or the other of the double-acting piston-and-cylinder means according to the direction of rotation of the pinion to provide power assistance in moving the rack when the pinion is rotated. In such an arrangement, opposite ends of the rack member may be fixedly carried by a piston of the piston-and-cylinder means, and the housing may comprise the corresponding cylinders. The ends of the rack member may each be fixedly secured to a said piston, and the bearing means may act on the pistons.

In such an arrangement, each piston may comprise a hollow cylindrical piston rod surrounding the end of the rack member and a piston head mounted externally of the hollow piston rod. The bearing means may act on the external cylindrical surface of the piston rod. The piston head will be fluid-tightly slidable within a cylinder of the piston-and-cylinder means.

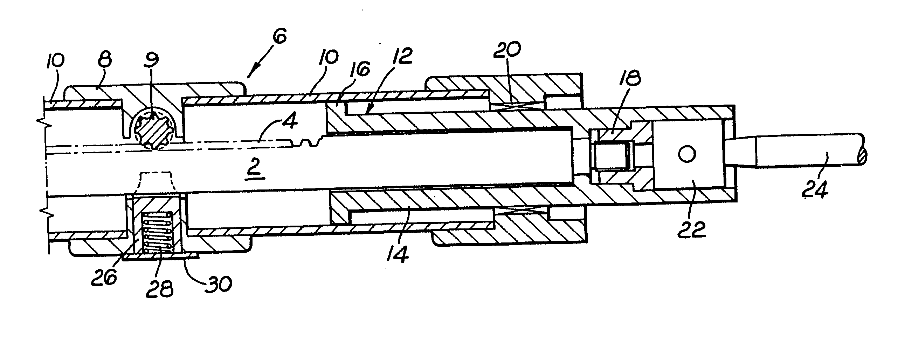

One embodiment of the invention is illustrated by way of example in the accompanying drawing, which is a partial diagrammatic longitudinal cross-section through a hydraulically-assisted rack and pinion steering mechanism.

As shown in the drawing, a rack bar 2 having a toothed rack portion 4 is mounted for longitudinal movement in a housing 6. The housing 6 includes a pinion housing 8, in which is rotatably mounted a pinion 9 in mesh with the toothed rack portion 4 of the rack bar. The pinion is carried splined on one end of a sleeve of a conventional rotary hydraulic control valve which is in turn connectable to the steering shaft of a motor vehicle, the sleeve, control valve and steering shaft not being illustrated in the drawing. It should be noted that the illustrated components of the steering mechanism are symmetrical on either side of the pinion 9.

The housing 6 further includes a cylinder 10 mounted on either side of the pinion housing 8. Each cylinder 10 coacts with a piston 12 to form a double-acting hydraulic piston-and-cylinder assembly for providing power assistance to the steering mechanism. The supply of hydraulic fluid is controlled in a conventional manner by the aforesaid rotary control valve.

Each piston 12 comprises a hollow cylindrical piston rod 14 surrounding, with clearance, one end of the rack bar 2, and a piston head 16 at the inner end of the piston rod which bears against the inner surface of the cylinder 10 and makes a fluid-tight seal therewith. Each outer end of the rack bar 2 is clamped by means of a fixing nut 18 into the piston rod. The piston rod is restrained from radial movement relative to the housing by means of a bearing 20, which includes a fluid-tight seal, mounted adjacent the outer end of the cylinder 10.

In the outer end of each of the pistons 12 is mounted a ball joint assembly 22 which carries one end of a rod 24 for connection to the steering linkage of a motor vehicle.

A pressure pad 26, which may be of fibre-reinforced plastics or of steel, for example, is mounted in the pinion housing 8 on the side thereof opposite to the pinion. A compression spring 28 is held against the pressure pad by a retaining cap 30 for the spring and pressure pad assembly, so that the pressure pad, which is slidable in the pinion housing, bears against the rear face of the rack bar 2 remote from the toothed rack portion 4 and resiliently urges the rack bar towards the pinion, so that by virtue of the inherent flexibility of the rack bar, the bar is flexed between its anchored ends mounted securely in the pistons 12 radially towards the pinion 9. The rack bar 2 is normally straight, and when the steering mechanism is first assembled there is radial movement in the rack bar.

However, as adjustment takes place, the bar will flex to accommodate that radial play. Alternatively, it may be desired to assemble the steering mechanism so that the bar is already initially flexed.

In use, radial movement of the pistons 12 relative to the housing 6 is prevented by the bearings 20 and the piston heads 16, but the pistons and the rack bar 2 carried between them are movable longitudinally of the housing. The rack bar is sufficiently robust to tolerate all the end thrusts that may be experienced in normal use, but has sufficient inherent radial flexibility in relation to its length between its fixed ends to allow the spring 28 acting through the pressure pad 26 to maintain proper mesh between the toothed rack portion 4 and the pinion 9, even after considerable wear has taken place. A too-rigid rack bar would require excessive pressure from the pressure pad which would interfere with the castor action of the steering, and should preferably be avoided.

The illustrated steering mechanism is simple and economical to manufacture, while being capable of being made sufficiently strong to withstand the forces normally expected to be exerted upon it. The central region of the mechanism is of relatively light weight, and the single link between the rods 24 connecting to the road wheels of a vehicle enables the distance between the centres of the ball joint assemblies 22 to be accurately maintained.

## Claims

1. A rack and pinion steering mechanism for a motor vehicle comprising a housing (6), a rack member (2) having a toothed rack portion (4) formed thereon and mounted for longitudinal movement in said housing (6), a pinion (9) rotatably mounted in said housing in meshing engagement with the toothed rack portion (4) and adapted for connection to the steering control of a motor vehicle for rotation thereby, and means (26, 28) for urging the toothed rack portion (4) into meshing engagement with the pinion (9), characterised in that the rack member (2) is inherently radially flexible, means (12, 18, 20) is provided to restrain the opposite ends of the rack member (2) against radial movement relative to the housing (6) and means (26, 28) is provided for resiliently flexing the rack member (2) between the said opposite ends thereof towards the pinion (9) to maintain correct meshing of the teeth of the rack portion (4) with the pinion (9).

2. A rack and pinion steering mechanism according to claim 1, wherein the means (26, 28) for resiliently flexing the rack member (2) is located in the housing (6) and acts against the rear of the rack member (2) opposite the pinion (9).

3. A rack and pinion steering mechanism according to claim 1 or 2, wherein the means for resiliently flexing the rack member (2) comprises a pressure pad (26) and a compression spring (28).

4. A rack and pinion steering mechanism according to claim 1, 2 or 3, comprising double-acting piston-and-cylinder means (10, 12) for providing power assistance.

5. A rack and pinion steering mechanism according to claim 4, wherein the double-acting piston and cylinder means comprises a cylinder (10) defined by the housing (6) on each side of the pinion (9) and a piston (12) in each cylinder (10), the opposite ends of the rack member (2) each being fixedly secured to a piston (12).

6. A rack and pinion steering mechanism according to claim 5, wherein said pistons (12) each comprise a piston head (16) and a hollow piston rod (14), the hollow piston rods (14) each surrounding an end portion of the rack member (2) and being supported by a bearing (20).

7. A rack and pinion steering mechanism according to claim 6, wherein the piston head (16) of each piston (12) is at the inner end of the piston rod (14) nearest the pinion (9), the piston rod (14) surrounds a said end portion of the rack member (2) with clearance and the end of the rack member (2) is fixedly secured to the piston rod (14) adjacent the outer end of the piston rod (14).

8. A rack and pinion steering mechanism according to claim 7, wherein a ball joint assembly (22) carrying one end of a steering rod (24) is mounted in the outer end of each piston rod (14).

9. A rack and pinion steering mechanism according to any one of the preceding claims, wherein the rack member (2) can be flexed towards the pinion (9) by up to substantially 0.25mm.

## Patentansprüche

1. Zahnstangenlenkungsmechanismus für ein Kraftfahrzeug mit einem Gehäuse (6), einem Zahnstangenteil (2), auf dem ein mit Zähnen versehener Zahnstangenbereich (4) vorgesehen ist und das zur Längsbewegung in dem Gehäuse (6) montiert ist, einem Ritzel (9), das drehbar in dem Gehäuse (6) mit dem mit Zähnen versehenen Zahnstangenbereich (4) kämmend angeordnet und mit der Lenkungssteuerung eines Kraftfahrzeuges verbindbar ist, um sich mit dieser zu drehen, und einer Einrichtung (26, 28), durch die der mit Zähnen versehene Zahnstangenbereich (4) so drückbar ist, daß er an dem Ritzel (9) kämmend angreift, dadurch gekennzeichnet, daß das Zahnstangenteil (2) von sich aus in radialer Richtung flexibel ist, daß eine Einrichtung (12, 18, 20) vorgesehen ist, die die entgegengesetzten Enden des Zahnstangenteiles (2) relativ zum Gehäuse (6) von einer radialen Bewegung abhält, und daß die Einrichtung (26, 28) vorgesehen ist, um das Zahnstangenteil (2) zwischen seinen entgegengesetzten Enden in Richtung auf das Ritzel (9) flexibel zubiegen, um das richtige Kämmen der Zähne des Zahnstangenbereiches (4) mit dem Ritzel (9) aufrechtzuerhalten.

2. Zahnstangenlenkungsmechanismus nach Anspruch 1, bei dem die Einrichtung (26, 28) zur flexiblen Durchbiegung des Zahnstangenteiles (2) in dem Gehäuse (6) angeordnet ist und auf das hintere Teil des Zahnstangenteiles (2) gegenüber dem Ritzel (9) einwirkt.

3. Zahnstangenlenkungsmechanismus nach Anspruch 1 oder 2, bei dem die Einrichtung zur flexiblen Durchbiegung des Zahnstangenteiles (2) ein Druckaufnahmeteil (26) und eine Druckfeder (28) umfaßt.

4. Zahnstangenlenkungsmechanismus nach Anspruch 1, 2 oder 3, bei dem eine doppelt wirkende Kolben-und-Zylinder-Einrichtung (10, 12) zur Leistungsunterstützung vorgesehen ist.

5. Zahnstangenlenkungsmechanismus nach Anspruch 4, bei dem die doppelt wirkende Kolben-und-Zylinder-Einrichtung einen durch das Gehäuse (6) an jeder · Seite des Ritzels (9) bestimmten Zylinder (10) und einen Kolben (12) in jedem Zylinder (10) aufweist, wobei jedes der entgegengesetzten Enden des Zahnstangenteiles (2) fest an einem Kolben (12) befestigt ist.

6. Zahnstangenlenkungsmechanismus nach Anspruch 5, bei dem jeder der Kolben (12) einen Kolbenboden (16) und eine hohle Kolbenstange (14) aufweist, wobei jede der hohlen Kolbenstangen (14) einen Endbereich des Zahnstangenteiles (2) umgibt und durch ein Lager (20) gelagert ist.

7. Zahnstangenlenkungsmechanismus nach Anspruch 6, bei dem der Kolbenboden (16) jedes Kolbens (12) sich an dem inneren Ende der Kolbenstange (14) dem Ritzel (9) am nächstliegendsten befindet, wobei die Kolbenstange (14) einen Endbereich des Zahnstangenteiles (2) mit einem Spiel umgibt und wobei das Ende des Zahnstangenteiles (2) fest an der Kolbenstange (14) in der Nähe des Außenendes der Kolbenstange (14) befestigt ist.

8. Zahnstangenlenkungsmechanismus nach Anspruch 7, bei dem eine Kugelgelenkeinheit (22), die ein Ende einer Lenkstange (24) trägt, in dem äußeren Ende jeder Kolbenstange (14) montiert ist.

9. Zahnstangenlenkungsmechanismus nach einem der vorhergehenden Ansprüche, bei dem das Zahnstangenteil (2) in Richtung auf das Ritzel (9) bis zu etwa 0,25 mm verbiegbar ist.

**Revendications**

1. Mécanisme de direction à crémaillère pour un véhicule à moteur comprenant un carter (6), un élément de crémaillère (2) sur lequel est formée une portion de crémaillère dentée (4) et monté pour se déplacer longitudinalement dans le carter (6), un pignon (9) monté en rotation dans le carter en engrènement avec la portion de crémaillère dentée (4) et adapté pour être raccordé à la commande de direction du véhicule à moteur de façon à tourner avec elle, et des moyens (26, 28) pour appliquer la portion de crémaillère dentée (4) en engrènement avec le pignon (9), caractérisé en ce que l'élément de crémaillère (2) est intrinsèquement radialement flexible, que des moyens (12, 18, 20) sont prévus pour empêcher les extrémités opposées de l'élément de crémaillère (2) de se déplacer radialement par rapport au carter (6) et que des moyens (26, 28) sont prévus pour fléchir élastiquement l'élément de crémaillère (2) entre ces extrémités opposées en direction du pignon (9) et maintenir ainsi un engrènement correct des dents de la portion de crémaillère (4) avec le pignon (9).

2. Mécanisme de direction à crémaillère selon la revendication 1, dans lequel les moyens (26, 28) pour fléchir élastiquement l'élément de crémaillère (2) sont disposés dans le carter (6) et agissent contre l'arrière de l'élément de crémaillère (2) opposé au pignon (9).

3. Mécanisme de direction à crémaillère selon la revendication 1 ou 2, dans lequel les moyens pour fléchir élastiquement l'élément de crémaillère (2) comportent un patin de pression (26) et un ressort de compression (28).

4. Mécanisme de direction à crémaillère selon la revendication 1, 2 ou 3, comportant des moyens de vérins à double effet (10, 12) pour procurer une assistance à la direction.

5. Mécanisme de direction à crémaillère selon la revendication 4, dans lequel les moyens de vérins à double effet comportent un cylindre (10) délimité par le carter (6) de part et d'autre du pignon (9) et un piston (12) dans chaque cylindre (10), les extrémités opposées de l'élément de crémaillère (2) étant chacune fixée sur un piston (12).

6. Mécanisme de direction à crémaillère selon la revendication 5, dans lequel chaque piston (12) comporte une tête de piston (16) et une tige de piston creuse (14), chaque tige de piston creuse (14) entourant une portion terminale de l'élément de crémaillère (2) et étant supportée par un palier (20).

7. Mécanisme de direction à crémaillère selon la revendication 6, dans lequel la tête de piston (16) de chaque piston (12) se trouve au niveau de l'extrémité intérieure de la tige de piston (14) la plus proche du pignon (9), la tige de piston (14) entoure une portion terminale de l'élément de crémaillère (2) avec jeu et l'extrémité de l'élément de crémaillère (2) est fixée sur la tige de piston (14) au voisinage de l'extrémité extérieure de la tige de piston (14).

8. Mécanisme de direction à crémaillère selon la revendication 7, dans lequel un ensemble de joint à rotule (22) portant une extrémité d'une biellette de direction (24) est monté dans l'extrémité extérieure de chaque tige de piston (14).

9. Mécanisme de direction à crémaillère selon l'une quelconque des revendications précédentes, dans lequel l'élément de crémaillère (2) peut être fléchi en direction du pignon (9) jusqu'à pratiquement 0,25 mm.

EP 0 178 128 B1